Europäisches Patentamt

European Patent Office

Office européen des brevets

(11) Publication number: **0 266 319**
**A2**

(12) **EUROPEAN PATENT APPLICATION**

(21) Application number: **87830377.5**

(22) Date of filing: **27.10.87**

(51) Int. Cl.⁴: **F 25 D 25/04**
**A 23 L 3/36**
**// B65G47/51**

(30) Priority: **30.10.86 IT 2218786**

(43) Date of publication of application:
**04.05.88 Bulletin 88/18**

(84) Designated Contracting States:
**BE DE ES FR GB NL**

(71) Applicant: **Alaska di Pirazzi Alfonsino**
**Via S. Alberto, 1916**
**S. Pietro in Casale (Bologna) (IT)**

(72) Inventor: **Pirazzi, Alfonsino**
**Via S. Alberto, 1890**
**S. PIETRO IN CASALE (Bologna) (IT)**

(74) Representative: **Caregaro, Silvio et al**
**c/o Società Italiana Brevetti S.p.A. Via Carducci 8**
**I-20123 Milano (IT)**

(54) **Improved apparatus for the deep-freezing of foods.**

(57) An improved apparatus is described, which can be used for the deep-freezing of foods.

The subject apparatus includes, inside a suitable and hermetically sealed housing, at least a pair of food conveyor units, the first one of which receives the foods from a housing body inlet and is adapted to subject the same to a substantially upwards motion, at the top end thereof means being provided to carry one food container at a time onto the top end of the second conveyor unit, which is adapted to subject the foods to a substantially downwards motion, means being provided at the lower end of said second unit to unload the deep-frozen foods at an apparatus outlet.

*Fig.1*

Bundesdruckerei Berlin

## Description

"IMPROVED APPARATUS FOR THE DEEP-FREEZING OF FOODS"

This invention is concerned with an improved apparatus adapted to perform the deep-freezing of foods.

Deep-freezing is a process nowadays extensively known, which substantially comprises subjecting raw or already cooked foods to low temperatures, in the range of about -50°C whereby said foods, once they have been kept for a predetermined amount of time at the above temperatures, become long-keeping provided that a condition is met whereby they are kept at a relatively low temperature, in the range of -20°C, up to the defrosting time. This way of keeping deep-frozen foods is known as "cold chain".

Presently, deep-freezing of foods is carried out by means of two basic types of apparatus, both of which work substantially according to the same process, and are differentiated from each other in the structure and design thereof.

A first type of known apparatus comprises substantially a long straight tunnel wherein the food containers are fed forward by a conveyor belt carrying the same from the apparatus inlet end to the unloading end thereof, the latter end being located at the opposite end from the former.

Said tunnel, which is hermetically sealed, is provided with a succession of cooling cells, per se known, adapted to provide progressive cooling of the foods whereby they arrive at the outlet end in a deep-frozen state.

The ways according to which the deep-freezing process is performed are not described in detail herein, in that they are out of the scope of this invention.

The straight tunnel apparatus briefly described herein above is affected by the important drawback of having a large overall length, whereby serious obstacles arise for a potential customer interested in the apparatus, but confronted with space problem.

The above drawback is increased by the fact that, in general, food feeding means are associated with one end of the apparatus, while deep-frozen food unloading and collecting means are associated with the opposite end. All these means take their own share of room which sums up to that taken by the apparatus, worsening the above drawback. A second type of known apparatus is provided, within a substantially cylindrical or parallelepipedal hermetically sealed housing, with food container conveyor means, which conveyors are laid out from the container inlet end to the outlet end thereof, according to a substantially spiral shaped path. Therefore, the products to be deep-frozen are loaded at the bottom of said spiral path and are unloaded, in the deep-frozen state, at the top end of the spiral path.

The subject apparatus has made it possible, within limits that will be mentioned further on, to overcome the drawback due to the large overall dimensions of the straight tunnel apparatus, in that the major dimension of this latter apparatus is the height thereof.

The limits within which the deep-freezing apparatus provided with spiral shaped food transfer means has made it possible to overcome the large overall dimension drawbacks of the straight tunnel deep-freezing apparatus originate from the fact that said first apparatus, while actually having smaller overall dimensions compared with the second one, still takes up a substantial amount of room due to the curvature radius of the spiral path along which the transfer means are laid out, which radius cannot be reduced below a predetermined minimum, under which said transfer means would not be able to operate correctly or, in the worst case, would not be able to move at all.

The above drawback originates mainly from the fact that the food container transfer means are comprised of a conveyor belt whose design varies according to which product has to be deep-frozen, but in any case can be brought down to a metal knit structure, or net structure conveyor which there fore is lengthwise deformable, to suit the spiral path to which it is constrained.

The belts mentioned above, in addition to being extremely expensive, whereby they negatively affect the overall cost of the apparatus, have very little strength and are prone to require frequent maintenance or a particular care in the process of loading food containers, and eventually these problems make the operation ot the subject apparatus very critical.

There has now been devised, and it makes the subject of this invention, a food deep-freezing apparatus which makes it possible to overcome all the drawbacks of the conventional apparatus mentioned above.

Therefore, it is an object of this invention to provide an apparatus for the deep-freezing of foods in general, whose overall dimensions are particularly reduced whereby the apparatus can be useful also for users whose available space is limited.

A further object of this invention is to provide an apparatus of the type mentioned above which, from an operational point of view, poses no particular maintenance problems, thereby avoiding the shutdown times deriving from the latter in the conventional machines, and particularly in the aforesaid apparatus provided with spiral shaped transfer means.

Furthermore, this invention provides a low cost machine, which makes it particularly competitive when compared with conventional apparatus in that, at a lower cost, it provides the same performance of the latter.

The features as well as the advantages of the apparatus for deep-freezing of foods in general, according to this invention, will become apparent from the following detailed description of a non limiting embodiment thereof, made with reference to the attached drawing, wherein:

Figure 1 is a side elevational view of the apparatus according to this invention, wherein the outer container or housing has been opened to show the apparatus structure;

Figure 2 is a view of the apparatus according to section line A-A of Figure 1;

Figure 3 is a schematic side view of the apparatus, to explain the operation thereof.

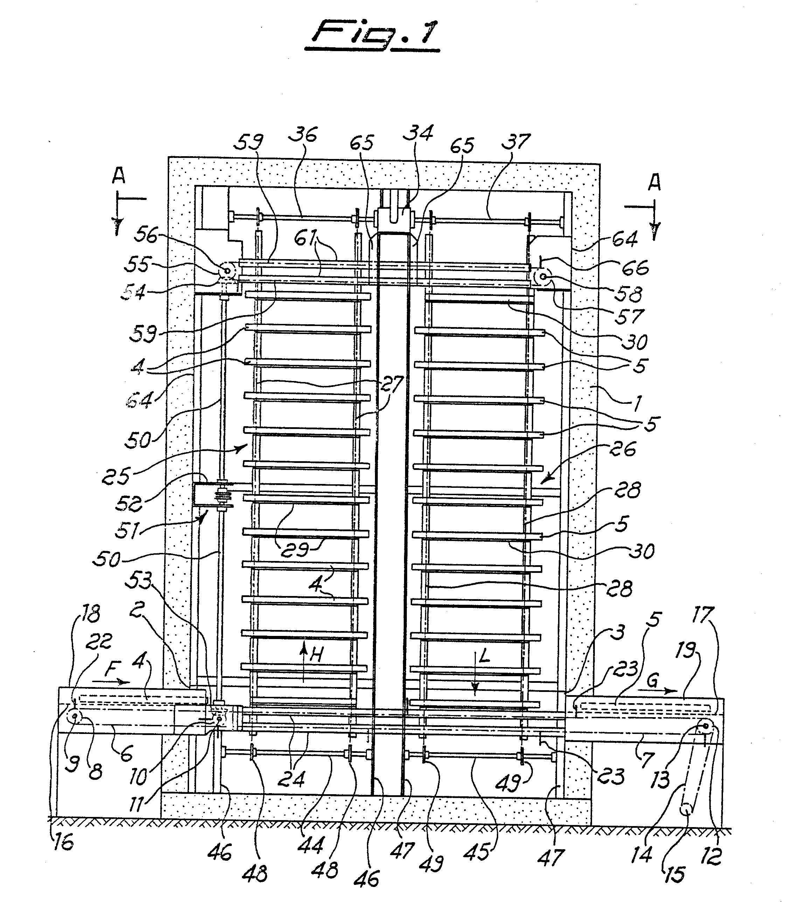

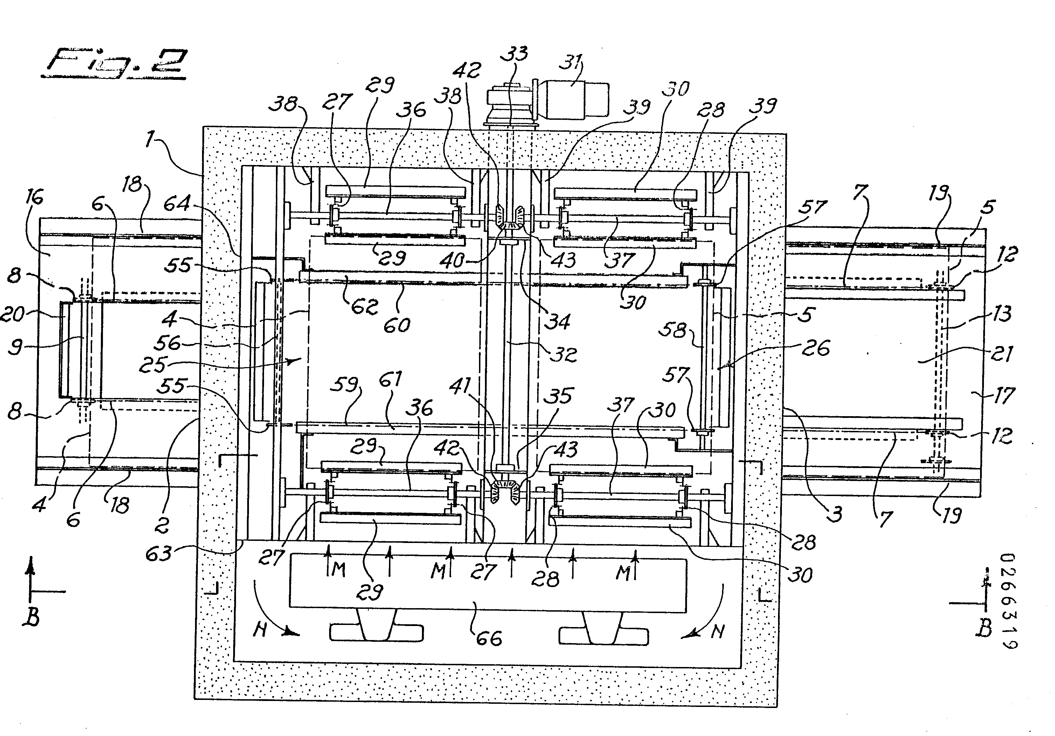

Reference will first be made to Figures 1 and 2, in order to described the preferred embodiment of the inventive apparatus.

It is assumed that the foodstuffs to be deep-frozen are introduced in the apparatus according to the invention while arranged in suitable containers whose structure does not need to be described in any detail.

The apparatus according to this invention includes an outer hermetically sealed container or housing 1, having preferably a substantially square cross-section. The latter will be provided with all those known means, neither shown nor described in detail, adapted to ensuring a seal towards the outside environment, whereby within container 1 there is maintained ideal temperature, humidity and similar conditions, for a correct deep-freezing process.

Housing 1 is provided, on two opposite sides, with an opening 2, through which the food containers are introduced in the apparatus, and with an opening 3 through which the containers holding the deep-frozen foods are taken out.

At the housing 1 inlet opening 2 and outlet opening 3 means are provided to move the food containers forward according to the direction of arrows F (towards the inside of the housing 1) and G (towards the outside of said housing) respectively. One of the food containers ready to be introduced in the apparatus according to this invention is shown in Figures 1 and 2, and referenced by number 4, while a similar deep-frozen product container is shown with a broken line when it has already come out of housing 1, and it is referenced by number 5.

The above mentioned means operative to load container 4 in, and to unload container 5 out, and so on for all the other containers in succession, one at a time, comprise two pairs of belts or chains for the transmission of motion (only one of which is shown in Figure 1), referenced with numbers 6 and 7, respectively.

First pair of chains 6, both of which are shaped as an endless ring, engage at the end thereof with a chain sprocket 8 mounted on a countershaft 9, and with a chain sprocket 10 mounted on countershaft 11, respectively. More particularly, first countershaft 9 will be able to shift on the apparatus structure, whereby it can perform also as a chain 6 tensioning means, to avoid sagging of the latter.

Second chain pair 7, which are shaped as endless rings as well, engage at one end thereof with chain sprockets adjacent to sprockets 10 and mounted on countershaft 11 as well, and at the opposite ends thereof they engage with chain sprockets 12 mounted on drive shaft 13 for operation of said chains 6 and 7, which is in turn drivingly connected, by means of a belt or chain 14, to a known geared motor 15 located in the lower part of the apparatus baseplate. By means of this particular type of drive connection the simultaneous motion of chains 6, 7 according to the direction of arrows F and G shown in Figure 1 is obtained, said chains thereby introducing, one at a time, the food containers inside the apparatus, or taking them out of the apparatus, still one at a time, once the deep-freezing process is over.

Still referring in particular to Figures 1 and 2, at the ends of chains 6, 7 located outside apparatus housing 1, there is provided a support shelf for food container 4, 5, shown at 16 and 17 respectively, which extends transversally for the same width of containers 4, 5 and for a length, outside housing 1, slightly larger (Figure 1) than that of said container.

On the sides of each of the containers 16, 17, walls 18, 19 are provided, acting as guide elements for containers 4, 5, towards the inner side and towards the outer side of housing 1, respectively. As it is shown in particular in Figure 1, walls 18, 19 have a height slightly higher compared to that of containers 4 and 5. As it can be noticed in particular from Figure 2, support shelves 16 and 17 for containers 4 and 5 are substantially U-shaped in that each of said shelves is provided, in a substantially central region, with a recess 20,21 respectively, which is closed on the side of shelf 16,17 remote from housing 1. The purpose of substantially rectangular recess 20,21 is to allow the pusher means for food containers to move through, about shelves 16 and 17. Said pusher means are associated with forwarding chains 6,7 and, when the latter are moved forward, they come into engagement with containers 4, 5 to introduce them into the housing 1 or to take them out therefrom.

Said pusher means comprise, for dragging chains 6, 7 a pair of cross members 22 which can both be seen sideways in Figure 1, while in Figure 2 only one of the cross members can be seen, i.e. the one located on the side of shelf 16 remote from housing 1. Cross members 22 are substantially C-shaped, their parallel sides being much shorter than the main side thereof, and the parallel sides thereof are fastened in any known way to chain 6.

As it can be noticed particularly in Figure 1, cross members 22 are arranged at 180° from each other so that, when the first one, i.e. the one facing upwards in Figure 1, causes the container 4 to be introduced inside the apparatus, the second one moves underneath shelf 16, along the idle stroke thereof, in order to position itself thereafter like the former cross member.

A system of container pusher means is provided on the second pair of chains 7 as well, and also in this latter case said pusher means comprise cross members 23 shaped substantially like former cross members 22 and fastened as well at the ends thereof to the pair of chains 7, in any known way. The number of cross members 23 fastened to the second pair of chains 7 will be apparently higher than the number of cross members associated to the pair of chains 6, both because chains 7 are much longer than chains 6, and particularly because the number of functions assigned to the pairs of chains 7 is much higher than those assigned to the first pair of chains 6.

In fact, referring in particular to Figure 1, it should be noted that there is provided six cross members 23 and the operations they have to perform, when moving above guide members 24, are the following:

1) complete positioning of container 4 on the means which will allow the same to be moved inside the apparatus;

2) prepare container 5 for coming out of the apparatus once it has reached the end of the deep-freezing path within the apparatus, and

3) control container 5 exit out of the apparatus, in particular out of housing 1.

It is apparent that, if a cross member 23 is provided for each of the functions listed above, an equal number of cross members will have to be provided along an idle stroke on the lower run of chains 7.Referring more particularly to Figure 1,the three cross members 23 performing the operations mentioned above are,in the following sequence, the one located on the left in said Figure, cross member 23 in the central position, and cross member 23 located outside housing 1.

Guide members 24, mentioned above, are provided both as a guide for chains 6, 7 and,relating to the portion of upper guide member 24 located within housing 1, as a support for food containers 4, 5.

As it will be more apparent in the following, the apparatus according to this invention includes two operating units for handling the containers within housing 1 and, only for sake of simplicity in the description the containers carried by the first of said operating units will be referenced by the number 4, while the containers carried by the second operating unit will be referenced by 5.

In fact, the apparatus of the invention includes, within housing 1, at least a pair of said operating units, which are generally shown at 25 and 26.

Operating units 25 and 26 extend substantially upwards, the first operating unit 25 being provided to move food containers 4 upwards, as shown by arrow H in Figure 1, while second operating unit 26 is provided to move food containers 5 downwards as shown by arrow L, still in Figure 1.

Each one of the operating units 25, 26 comprises two pairs of chains, 27, 28 respectively, vertically arranged and parallel to each other, and to each pair of chains 27, 28 there is fastened a plurality of cross members 29, 30 respectively, uniformly spaced and provided to receive and support food containers 4 and 5 during the upwards motion thereof, as far as cross members 29 are concerned, and during downwards motion of containers 5, as far as cross members 30 are concerned.

The above cross members 29, 30, which are shown both in a front view on a side of chains 27, 28, shaped as endless rings, and in plan view in Figure 2, are each comprised of a metal section having the ends thereof fastened in any known way to chains 27 and chains 28. This can be noticed more particularly from Figure 1 which, it should be emphasized, corresponds to section B-B of Figure 2. As it can be noticed in particular from Figure 2, cross members 29 and 30 which are located on one side of chains 27, 28 perform an active stroke, i.e. they lift (chain 27) and lower (chain 28) containers 4, 5, while cross members 29 located on the opposite side perform an idle stroke, i.e. substantially a return stroke.

More particularly, cross members 29, 30 along their active stroke, still referring in particular to Figure 2, are the ones facing each other, i.e. the ones located on the innermost side of chains 27 and 28. In fact, in Figure 2 there is shown in broken lines container 4 which is rising while being supported by cross members 29, and container 5, in broken lines as well, which is moving along the downward run while being supported by brackets 30. The remaining brackets 29 and 30 located towards inner wall of housing 1, are the ones moving along the idle, or return stroke. More particularly, the above cross members 29 perform a downwards motion, while cross members 30, during the return stroke thereof, move upwards.

The control of the displacements of chains 27 and 28, and therefore of cross members 29 and 30 associated therewith, is obtained through a single driving motor 31 which, by means of suitable transmission systems, is able to simultaneously control both the actuation of chains 27 and that of chains 28, as it is apparent with reference to Figures 1 and 2.

Referring not to the above Figures, to the shaft of drive motor 31 there is connected a rotating transmission shaft 32, through a well known bevel drive transmission 33. The rotating drive shaft 32 extends between first and second operating unit 25, 26 and, through a suitable connection including transmission linkages received inside box-like bodies 34, 35 fastened in any known way to the apparatus structure, transmits simultaneously the predetermined rotational drive to shafts 36 around which chains 27 are engaged, and to shafts 37 around which chains 28 are engaged. Shafts 36 and 37 are rotatably supported in any known way on support brackets 38 and 39 respectively, fastened to the inside wall of housing 1.

The arrangements for the transmission of the rotation motion, as mentioned above and located within box-like bodies 34, 35, include respectively a bevel pinion 40, 41 mounted on rotational motion transmission shaft 32, which engages simultaneously with a pair of bevel gears, 42 and 43 respectively, mounted on shafts 36 and 37 respectively. This drive connection enables transmission of the drive as described above, to chains 27 and 28 and therefore to cross members 29 and 30.

As it should be noticed in particular from Figure 1, in the lower portion of operating units 25, 26, underneath guides 24, there is provided a pair of shafts 44, 45, rotatably supported at the ends thereof by means of suitable support uprights 46 and 47. On shafts 44 and 45 there is mounted two sprockets 48 and 49 respectively, around which the lower end of dragging chains 27, 28 engages. Sprockets 48 and 49 thereby perform as tension ing and transmission means for chains 27 and 28.

The means providing for the loading of food containers 4 into the apparatus, and for the ejection of containers 5 carrying the deep-frozen foods, have been described above. Said means are operative, on the one hand, to arrange said containers 4 on brackets 29 being moved upwards, and on the other hand to take out containers 5, one at a time, from brackets 30 being moved downwards.

Since the containers have to be moved from first operating unit 25 to second operating unit 26 once they have reached the top end of said first operating unit 25, at the top ends of operating units 25, 26 there is arranged corresponding means, provided to carry one food container at a time from the first to the second operating unit, and in particular to move said container from a bracket 29 to a bracket 30.

Said means, having substantially the same structure as the displacing means provided at the lower end of operating units 25, 26, are shown in Figure 1, and can be better seen therein, but a portion thereof can also be seen in Figure 2.

First of all, said means include a vertically extending transmission shaft 50 located adjacent the first operating half 25, on the side of apparatus housing or contain er 1. Since the apparatus height is not negligible shaft 50 is made in two halfs connected to each other through a known transmission coupling 51 whose box-like guard is fastened in any known way to apparatus housing 1. In this way bending of transmission shaft 50 is avoided which could jeopardize the transmission of motion from food container forwarding means located at the bottom, to the corresponding ones located at the upper end of operating units 25 and 26.

Transmission shaft 50 is rotated since the lower end thereof is provided with means receiving motive drive from chain 6 and 7 forwarding motion drive means. More particularly, as it can be seen from Figure 1, at the lower end of transmission shaft 50 there is mounted a bevel pinion 53, which constantly engages with one of the gears 10 which will be provided, to that end, with a toothing suitable to enable both said driving connection, and the engagement of transmission chain 6.

The fact that bevel pinion 53 mounted on shaft 50 is constantly engaging with the driving means of feed chains 6, 7, makes it possible to obtain a perfect syncronization between the forward motion of containers 4, 5 at the lower end of operating units 25, 26, and the forward motion of the same containers 4, 5 at the top end of said operating units.

To attain the object mentioned above, at the upper end of transmission shaft 50 there is mounted a further bevel pinion 54 which is in constant engagement with a sprocket 55 mounted at the end of motion transmission shaft 56.

It should be noticed in particular from Figure 2 that at the opposite end of motion transmission shaft 56 there is mounted a similar sprocket 55 which, as the former one, is located in a position corresponding to that of the lower sprockets 10 actuating the forward motion of the driving chains 6.

As it is shown in Figure 2, the part of the apparatus described above is located on one side of operating unit 25, in particular on the side of housing 1. A corresponding set of sprockets 57 is located on the side of operating unit 26 facing housing 1, and said sprockets 57 are mounted on a motion transmission shaft 58.

Around sprockets 55 and 57 there is engaged two motion transmission chains 59, 60, which displace the food containers from the position where they are referenced by 4 (shown in broken line in Figure 2) to the position wherein they are referenced by 5 (still in broken line in Figure 2).

Chains 59, 60 as well as lower chains 6, 7 are slidingly received inside suitable guides 61, 62 whose upper portion performs as a sliding support member for food containers similarly to lower sliding support guides 24. In fact, as it is apparent in particular from Figure 1, chains 27, 28 extend above guides 61 whereby brackets 29, 30 associated therewith rise substantially to the same height of the upper portion of guides 61, 62, so that the food containers can be taken out from brackets 29 and, after having been supported in their sliding motion by the upper portion of guides 61, 62, can be eventually carried on to brackets 30.

It is apparent that the aforesaid assembly of motion transmitting shafts 56 and 58, from guides 61 and 62, will be supported in any known way by the apparatus structure. For instance, the motion transmission shafts 56 and 58 will be directly supported by a wall 63 located inside housing 1, while guides 61 and 62 will be supported by projections 65 fastened above box-like bodies 34 and 35 containing the motion transmitting mechanisms from shaft 32 to shafts 36 and 37.

Similarly, though not mentioned herein above, shafts 36 and 37 mentioned above are supported, at the ends thereof, on one side by the same box-like bodies 34, 35 and on the opposite side, in any known way, by a wall 64 arranged inside apparatus housing 1.

At this point it should be noted that the room included between inner walls 63, 64 and apparatus housing 1 is the normal thermal insulation space which enables, as it is particularly apparent from Figure 2, a known refrigeration group 66 to be installed, said group being shown in Figure 2 but not described in detail herein in that it can be whatsoever.

In Figure 2 arrows M and N show the refrigerant fluid flow direction, said fluid being for instance carbon dioxide, and in particular arrows M show said fluid flow direction towards the apparatus operating part, while arrows N show said recirculating fluid flow direction.

Before the operation of the apparatus according to this invention is described, it is worthwhile mentioning that said apparatus will be provided with all those means (which are known and therefore are not described) adapted to ensure a correct operation thereof, such as control means for driving motors 15, 31, temperature control means, moisture control means and other similar control means arranged within the apparatus, emergency means in case of a breakdown or failure of some part of the apparatus. All these means, and others not mentioned in detail, can be for instance controlled and driven by a suitable processor, whereby the apparatus can operate automatically.

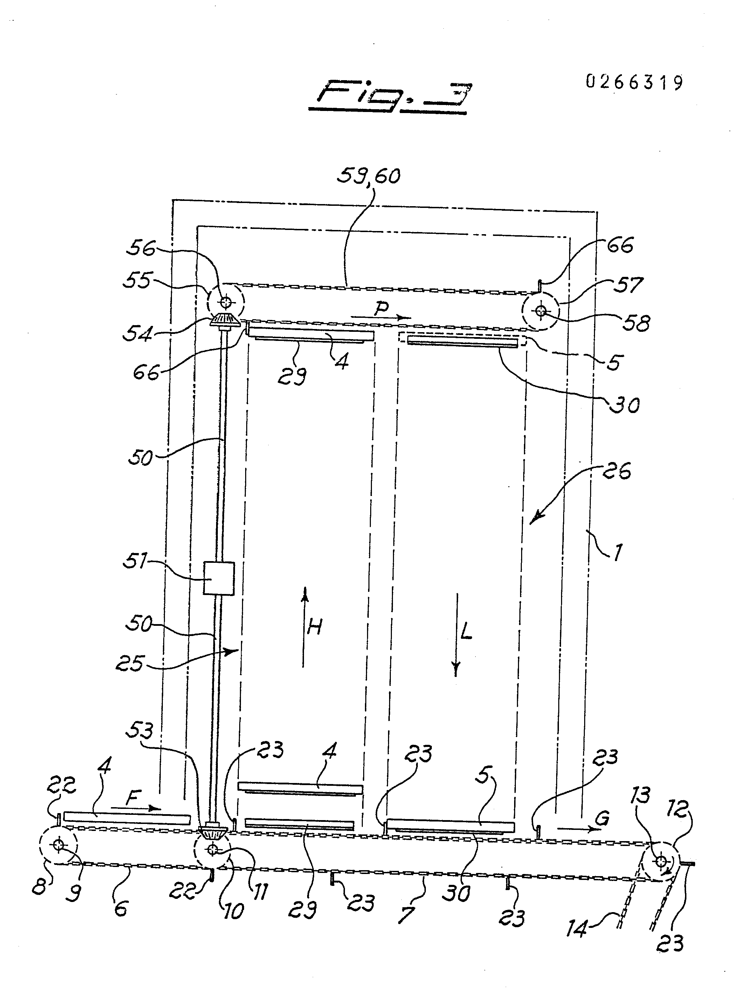

The operation of the apparatus according to this invention will now be described and it will be useful, for that purpose, while keeping in mind the content of Figures 1 and 2, to make particular reference to the diagram of Figure 3 showing the basic principles of said operation.

It will be understood that, when reference will now be made to some of the components of the apparatus according to this invention, clearly reference is also intended to be made to the ones which are not recalled in detail but obviously cooperate with the ones explicitly mentioned.

Therefore, referring now to Figure 3, it is assumed to start from the apparatus initial operation step whereby, within housing 1 there has been reached the steady state conditions required for the deep-freezing process, and the first container 4 holding foods to be deep-frozen is prearranged at the inlet 2 of the apparatus.

Action is taken to actuate driving motor 15 for a predetermined amount of time, during which a forward motion takes place simultaneously for lower dragging chains 6, 7 and, through transmission shaft 50, also for upper chains 59, 60. Through cross members 22 provided on lower chains 6, and in particular through the cross member shown at the position of sprocket 8, chains 6 control the forward motion of food container 4 towards the apparatus interior, according to the direction of arrow F. When cross member 22 mentioned above has reached sprockets 10 cooperating with sprockets 8 to actuate the forward motion of chain 6, said cross member passes to the lower run of the chains whereby container 4 would stop in that position, i.e. it would be only partially arranged on support brackets 29. At this stage cross members 23 associated with second chains 7 come into operation, said cross members, during the previous run of food container 4 having performed an idle stroke in that, as it is apparent in particular from Figure 2, the width of both lower and upper cross members, is smaller than the distance between support brackets 29 and 30 belonging to operating units 25 and 26. In fact, lower cross members 22, 23 and upper cross members 66 associated with dragging chains 59, 60 which were not specifically referenced to in the description of the preferred embodiment, cooperate only with the food containers 4, 5. During the idle stroke of cross members 23, also cross members 66 of chains 59, 60 have run along an idle stroke since, on support brackets 29 and 30, located at the top end of operating units 25, 26 no food container is present, for the time being.

The first active forward motion of cross members 23, i.e. the one corresponding to the active use of one of said cross members engaging container 4, has limited amplitude in that the same is only necessary to complete positioning of food container 4 on support bracket 29. Drive motor 15 will be suitably programmed in view of said purpose.

At this stage, is actuated the second drive motor 31 which, through the transmission linkages described above, provides upwards motion of support brackets 29, in particular on that side where one of said brackets supports a food container 4 which advances to the position shown in full line, on the second support bracket 29 starting from the bottom. Therefore, support brackets 29 move upwards, according to the direction of arrow H, with a periodical forward motion starting every time a food container 4 has been prearranged on a support bracket 29. Correspondingly, owing to the above mentioned connection between first and second operating units 25, 26, support brackets 30 adjacent to support brackets 29 supporting food containers 5 move downwards, according to the direction of arrow L and, during this stage which can be considered the machine loading stage, said support brackets 30 make an idle stroke.

As it is described above for one of the support brackets 29, all the brackets underlying the first one having received the first food container 4 are loaded with containers 4, and said support brackets move upwards, according to the direction of arrow H and with a periodical motion, wherein each forward step substantially matches the distance between brackets.

When all support brackets 29 have been loaded with a food container 4, the bracket which arrives to the position corresponding to the top end of first operating unit 25 must apparently be moved, according to the direction of arrow P of Figure 3, to the top end of second operating unit 26, in particular on bracket 30 located in said position.

This operation, which by the way is performed while at the bottom end of operating units 25 and 26 the loading of containers 4, one at a time, keeps going on, is assigned to dragging chains 59, 60 and, more particularly, to cross members 66 associated therewith. As it is apparent from Figure 3, a cross member 66 is provided to perform said shifting and the container is brought from the position shown in full lines and referenced by 4, to the position shown in broken lines and referenced by 5. Support bracket 29 whereon food container 4 is now no longer present, starts its downwards stroke on the side of operating unit 25 opposite to that where it has intermittently run along its upwards stroke.

Simultaneously, support brackets 30 adjacent to brackets 29 which move upwards according to the direction of arrow H, are brought down according to the direction of arrow L and, as it has been described above for a container 4,5, on each of said support brackets 30 there is arranged a food container 5 which therefore starts its downwards moving stage, towards apparatus outlet end 3, whereform it will be unloaded as it is shown in Figure 1. That container 5 which has to be taken out of the apparatus according to the direction of arrow G of Figures 1 and 3, is shown at the lower end of operating unit 26, and cross member 23 located on the left side thereof in Figure 3, i.e. behind the same container, will be the one performing the unloading of container 5.

Therefore, the above described operating cycle is continued, by loading one container 4 at a time on dragging belt 6, each time a preceding container 4 has been loaded into the apparatus. This arrangement of containers 4 on dragging belt 6 can be performed in any known way, not shown.

From the foregoing description, the advantages deriving from the use of the apparatus according to this invention are apparent, and they can be summarized, at least concerning the main ones, as it is pointed out in the following:

1) limited overall dimensions of the apparatus, whereby the same can be installed also on the premises of medium-small users;

2) extremely simple construction design whereby the conventional operations required by the known machines are reduced to a minimum, if not eliminated;

3) easy adjustment of the apparatus operating speed, as a function of the type of food to be deep-frozen, in that only two driving motors have to be controlled;

4) compared to conventional machines, and in particular to the spiral shaped ones, complicated members subject to wear and therefore to frequent replacement are done away with;

5) high operating flexibility with a possible complete automation of the deep-freezing process.

It should finally be understood that variations and/or modifications can be made to the apparatus for the deep-freezing of foods according to this invention, without exceeding the scope of protection of the same.

## Claims

1. An apparatus for the deep-freezing of foods including, within an hermetically sealed and suitably thermally insulated container or housing, a cooling station for reducing the inside temperature of said container or housing within which handling means are provided for forwarding the foods and/or containers holding said foods from an inlet end to an outlet end of said apparatus, characterized in that said foods and/or foods containers (4, 5) handling means include at least one pair of substantially adjacent and vertically arranged operating units (25, 26), the first one of which is fed with containers (4) holding the foods to be deep-frozen, one at a time, and is adapted to subject them to a substantially upwards motion at the end of which said containers are transferred, one at a time, to the top end of a second operating unit (26) which is adapted to subject foods containers (5) undergoing deep-freezing, to a substantially downwards motion all the way down to the deep-frozen foods container (5) outlet end (3) from the apparatus, to the bottom part of said first and second operating units (25, 26) there being associated dragging means adapted respectively to feed one container (4) at a time at the lower end of said first operating unit, and to cause deep-frozen foods containers (5) to be taken out, one at a time, from the lower end of said second operating unit (26).

2. The apparatus for deep-freezing of foods according to Claim 1, characterized in that each one of said operating units (25, 26) includes, at two opposite sides of containers (4, 5), respective support brackets (29, 30) whereon said containers (4, 5) are arranged, said brackets (29, 30) being carried by dragging chains, respectively (27, 28) extending vertically and on the sides of containers (4, 5), said dragging chains (27, 28) being actuated for forward motion by a driving motor (31) through a transmission linkage adapted to subject chains (27) to such a motion that containers (4) move upwards, and dragging chains (28) to such a motion that foods containers (5) move downwards.

3. The apparatus for deep-freezing of foods according to Claim 1, characterized in that the means for loading foods containers (4), one at a time, on first operating unit (25), and to unload deep-frozen foods containers (5) from the apparatus, include at least two pairs of chains (6, 7) driven by a single driving motor (15), the forward motion of the first pair of chains (6) being synchronized with that of the second pair of dragging chains (7) through an intermediate transmission shaft (11), the first pair of chains (6) extending for a sufficient length to protrude outside apparatus housing (1) in order to receive, one at a time, foods containers (4), and being partially contained within said housing (1) in order to feed said containers (4) onto support brackets (29) of first operating unit (25), the second pair of dragging chains (7) extending for a length substantially equal to the width of operating units (25, 26) and further protruding outside housing (1) to enable deep-frozen food containers (5) to come out, one at a time.

4. The apparatus for deep-freezing of foods according to Claim 3, characterized in that the first and second pair of dragging chains (6, 7) are provided with pusher members (22, 23) respectively, which are operative, when located on the upper run of dragging chains (6, 7) to move foods containers (4, 5).

5. The apparatus for the deep-freezing of foods according to Claim 4, characterized in that said pusher members (22, 23) are cross members fastened to dragging chains (6, 7) and arranged substantially perpendicular to the forward moving direction of the latter, and are adapted to come into engagement with the back side of containers (4, 5) referred to the forwarding direction thereof.

6. The apparatus for deep-freezing of foods according to Claim 5, characterized in that the width of cross members (22, 23) is smaller than the distance between brackets (29, 30) for supporting foods containers (4, 5).

7. The apparatus for deep-freezing of foods according to Claim 1, characterized in that the foods containers forwarding means from the top end of first operating unit (25) to that of second operating unit (26) include at least a pair of dragging chains (59) located on the sides of containers (4, 5), which are provided with pusher means for the same, from a support bracket (29) to the adjacent support bracket (30).

8. The apparatus for the deep-freezing of foods according to Claim 7, characterized in that said pusher means comprise cross members (66) fastened to chains (59) and substantially perpendicular thereto which, when positioned on the upper run of chains (59, 60), come into engagement with the back side of containers (4, 5), referred to the forwarding direction thereof.

9. The apparatus for the deep-freezing of foods according to Claim 8, characterized in that the width of cross members (66) is smaller than the distance between support brackets (29, 30) supporting food containers (4, 5).

10.The apparatus for the deep-freezing of foods according to Claim 9, characterized in that dragging chains (59) are connected, by means of a transmission shaft (50), to at least one of the lower dragging chains (6, 7) in order to obtain synchronization between pusher means (62) and pusher means (22 and 23).

11. The apparatus for the deep-freezing of foods according to Claim 1, characterized in that the first and second operating units (25, 26) and more particularly the means supporting foods containers (4, 5) and respectively subjecting the same to an upward motion, move in a substantially periodical fashion, wherein each individual step forward has a length substantially equal to the distance between two adjacent container (4, 5) support means.

0266319

Fig.1

**Fig.2**

Fig. 3